Europäisches Patentamt

European Patent Office

Office européen des brevets

(19)

(11) **EP 0 832 779 B1**

(12) **EUROPEAN PATENT SPECIFICATION**

(45) Date of publication and mention
of the grant of the patent:
**12.11.2003 Bulletin 2003/46**

(51) Int Cl.⁷: **B60L 3/10**

(21) Application number: **97115845.6**

(22) Date of filing: **11.09.1997**

(54) **A control apparatus for an electic vehicle**

Steuerungsapparat für Elektrofahrzeug

Appareil de commande pour véhicule électrique

(84) Designated Contracting States:
**CH DE FR LI**

(30) Priority: **25.09.1996 JP 35383296**

(43) Date of publication of application:
**01.04.1998 Bulletin 1998/14**

(73) Proprietor: **Hitachi, Ltd.**
**Chiyoda-ku, Tokyo 101 (JP)**

(72) Inventors:
• **Suzuki, Masato**
**Naka-gun, Ibaraki 319-21 (JP)**

• **Yasuda, Kouji**
**Hitachinaka-shi, Ibaraki 312 (JP)**
• **Nakata, Kiyoshi**
**Nishiibaraki-gun, Ibaraki 309-12 (JP)**
• **Toyota, Eiichi**
**Hitachinaka-shi, Ibaraki 312 (JP)**

(74) Representative: **Strehl Schübel-Hopf & Partner**
**Maximilianstrasse 54**
**80538 München (DE)**

(56) References cited:
**EP-A- 0 521 162**          **US-A- 5 473 225**

## Description

## BACKGROUND OF THE INVENTION

### Field of the Invention

The present invention relates to a control apparatus for an electric vehicle having a main controller and a plurality of inverter controllers supervised and controlled by the main controller, in which each of the inverter controllers controls an inverter, which feeds at least one driving motor.

More particularly, the present invention relates to the above constructed control apparatus for an electric vehicle, which can provide the excellent adhesion ability and hence attain the desired acceleration or deceleration characteristic of the electric vehicle.

### Description of Related Art

The laid-open Japanese Patent Application JP-A-4-248301 (1992), owned by the same applicant as the present application, discloses a control apparatus for an electric vehicle of this kind.

Namely, the disclosed control apparatus has a main controller and plural inverter controllers, which are supervised and controlled by the main controller. Each of the inverter controllers controls an inverter. The inverter feeds an individual driving motor.

In this prior art, an inverter feeds only one driving motor. As apparent from the description later, however, the present invention has nothing to do with the number of driving motors to be fed by one inverter.

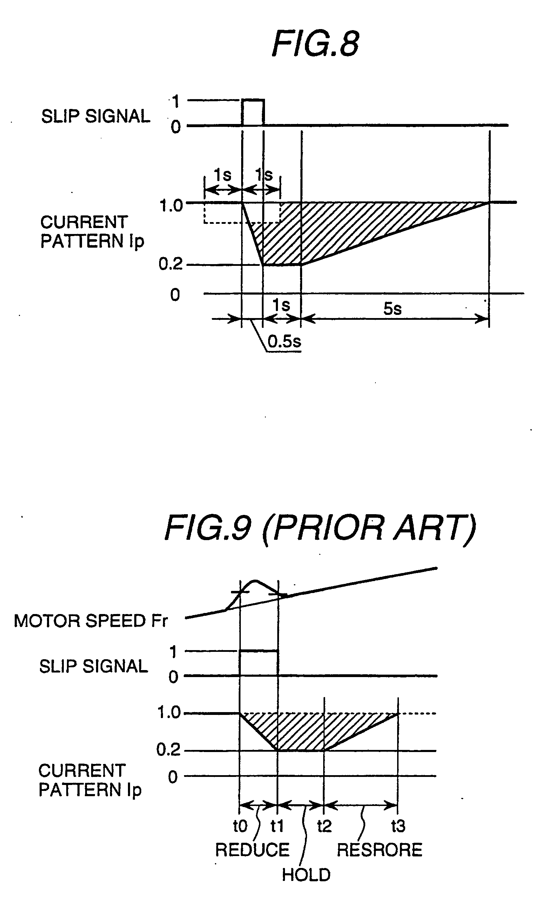

As far as the re-adhesion control is concerned, this prior publication is described as follows. The operational principle thereof will be explained briefly, referring to Fig. 9 of the accompanying drawings.

The figure denotes only a slip phenomenon during the acceleration operation of an electric vehicle. However, it is to be noted that the same as described below is applied to a skid phenomenon during the deceleration operation, since both are common to each other in view of both being the nonadhesive status of a driving wheel.

As shown in Fig. 9, when a slip occurs in a certain driving wheel, a speed of a driving motor coupled to the wheel increases unusually. The unusual change in the motor speed $F_r$ can be detected by the changing rate in the output voltage of a tachometer generator attached to the driving wheel. Upon detection of such change in the motor speed $F_r$, a slip signal is produced, which assumes "1" during the occurrence of a slip, i.e., as the duration $t_0 \sim t_1$ in Fig. 9.

While the slip signal exists a motor current pattern $I_p$ is reduced. In the duration of $t_1 - t_2$ after the slip signal disappeared, the current pattern $I_p$ is hold at the reduced value for a moment, as shown. Then, in the duration of $t_2 \sim t_3$, the current pattern $I_p$ is restored up to the original value so slowly that a slip does not occur again.

As shown in Fig. 9, the torque corresponding to a hatched portion in the current pattern $I_p$ is lost because of the aforesaid re-adhesion control done against the slip.

Since the re-adhesion control as mentioned above, i.e., the duration $t_0 \sim t_3$, usually lasts several seconds of time, the acceleration characteristic of the electric vehicle is seriously damaged, if a slip occurs repeatedly. The riding quality of the electric vehicle is also degraded remarkably, because the re-adhesion control as mentioned above causes fluctuation in the torque produced by the driving motor.

Also US-5,473,225 from which the precharacterising first part of claim 1 starts out discloses a control apparatus for an electric vehicle comprising a main controller and a plurality of inverter controllers. Each inverter controller detects a slip or slide condition of a wheel from a speed signal of a motor connected to the wheel, and controls the motor so as to re-establish proper traction.

## SUMMARY OF THE INVENTION

It is an object of the invention to provide a control apparatus for an electric vehicle which improves adhesion conditions of the wheels and attains a desired acceleration or deceleration characteristic of the vehicle.

This object is solved by the apparatus set forth in claim 1. The subclaims are directed to preferred embodiments of the invention.

An embodiment of the present invention is a control apparatus for an electric vehicle comprising a main controller for determining an operation status of the electric vehicle as well as a plurality of inverter controllers, supervised and controlled by the main controller, each of which controls an inverter feeding at least one driving motor of the electric vehicle, wherein once a slip or skid occurs in a driving wheel, the slip or skid can be suppressed and, on the basis of information obtained from the slip or skid, localized as much as possible so as not to extend to other wheels, whereby the unnecessary reduction of torque to be produced by a driving motor can be prevented to attain the desired acceleration or deceleration characteristic.

According to a feature of an embodiment, when a slip or skid occurs in a certain driving wheel, the main controller reduces a torque pattern for a driving motor coupled to the nonadhesive wheel in response to a nonadhesion signal from an inverter controller associated with the driving motor, and executes the presumption of a location where the slip or skid has occurred and a state of the slip or skid at that time by using the received nonadhesion signal as well as the correction of torque instructions for the remaining driving motors on the basis of the presumption result.

According to an embodiment of the present invention, when a slip or skid occurs in a driving wheel, a torque pattern for a driving motor coupled to a wheel on the rear side in the travelling direction with respect to the nonadhesive wheel is reduced on the basis of the result of the aforesaid presumption.

With this, even when a succeeding wheel, which is on the rear side in the travelling direction, passes along the location where a slip or skid occurs in a preceding wheel, the succeeding wheel can be prevented from slipping or skidding. Namely, the occurrence of a slip or skid in the succeeding wheels is suppressed. In other words, a slip or skid is limited to the first occurrence, and therefore the occurrence thereof can be said to be localized.

The re-adhesion control as carried out in the prior art is not repeated unnecessarily and hence the undesirable decrease in torque caused by such control is prevented.

BRIEF DESCRIPTION OF THE DRAWINGS

Fig. 1 is a block diagram schematically showing the whole construction of a control apparatus for an electric vehicle according to an embodiment of the present invention, in which it is to be noted that one of a pair of inverter controllers 2a, 2b is indicated by a block only without its details, since both have the same construction;

Fig. 2 is a functional block diagram explaining the function and operation of the main controller 1 included in the embodiment as shown in Fig. 1;

Fig. 3 is a flow chart explaining the operation of the main controller 1 as above;

Fig. 4 is a functional block diagram for explaining the function and operation of the inverter controller 2a, 2b in the embodiment as shown in Fig. 1;

Fig. 5 is a flow chart explaining the operation of the inverter controller 2a, 2b as above;

Fig. 6 is a supplemental drawing for explaining the operational principle of the localization of a slip or skid attained by the present invention;

Fig. 7 is a flow chart showing the abnormality processing executed in the main controller 1;

Fig. 8 is a drawing for explaining the effect of the control by the embodiment of the present invention; and

Fig. 9 is a drawing for explaining the operation of the conventional re-adhesion control.

DESCRIPTION OF THE PREFERRED EMBODIMENT

In the following, description will be made of an embodiment of the present invention, referring to the accompanying drawings.

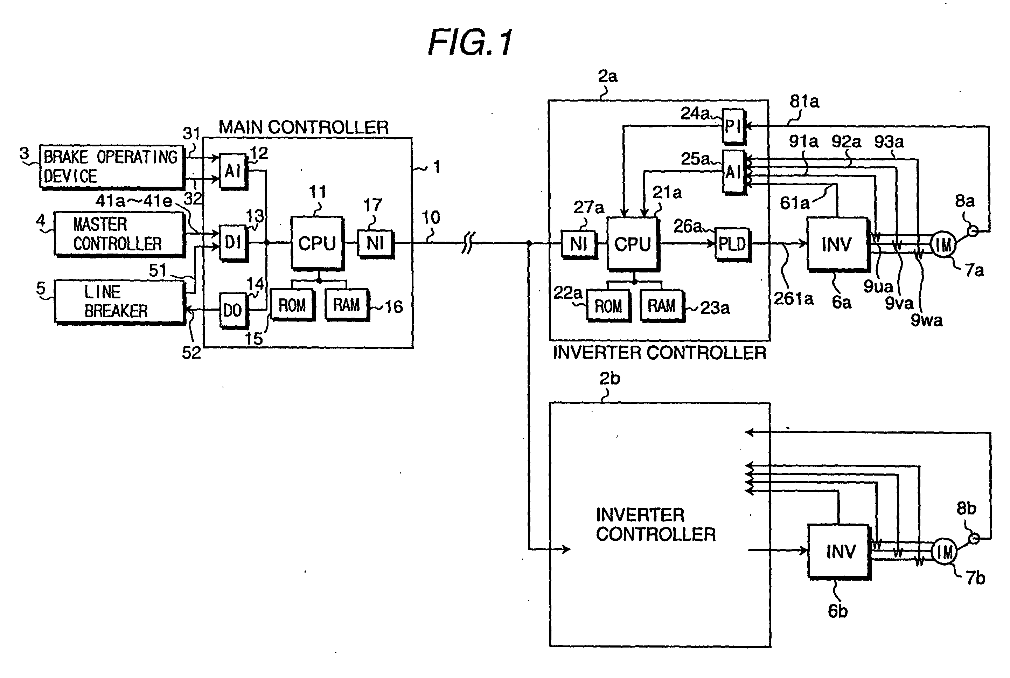

Fig. 1 is a block diagram schematically showing the whole construction of a control apparatus for an electric vehicle according to an embodiment of the present invention.

As shown in the figure, main controller 1 is composed of central processing unit (CPU) 11, analog interface (AI) 12, digital input interface (DI) 13, digital output interface (DO) 14, program memory (ROM) 15, work memory (RAM) 16 and network interface (NI) 17. These components are coupled with each other through well-known, appropriate data buses.

Brake operating device 3 supplies load weighing pattern 31 and brake pattern 32 to CPU 11 through the analog interface 12. The load weighing pattern 31 is an analog signal in proportion to the body weight of a vehicle or vehicles, which depends on the number of passengers or the amount of the loaded freight.

Notch instructions 41a 41e from master controller 4 and contact status signal 51 from line breaker 5 are also supplied to CPU 11 through the digital input interface 13. CPU 11 produces breaker driving signal 52 to the line breaker 5 through the digital output interface 14. When the breaker driving signal 52 is "1", the line breaker 5 is driven to close. When the signal 52 is "0", the breaker 5 is released to be opened.

Using RAM 16, CPU 11 executes a predetermined processing in accordance with the program stored in ROM 15 on the basis of the signals taken therein through the interfaces 12, 13, whereby the operation status of the electric vehicle is determined. Further, the processing executed by CPU 11 will be described in detail later. The thus determined operation status of the electric vehicle is transmitted to inverter controllers 2a, 2b through the network interface 17 and transmission path 10. As a transmission path, any type can be used, of course; i.e., serial type or parallel type.

Usually, plural inverter controllers are connected to a single main controller. In the following, description will be done of the case where two sets of the inverter controllers 2a, 2b are connected to the single main controller 1, as shown in the drawing. Further, it is to be noted that since both of the inverter controllers 2a, 2b have the same construction, the details of the inverter controller 2b is omitted in the figure and only the inverter controller 2a will be described in the following description.

The inverter controller 2a is composed of central processing unit (CPU) 21a, analog interface (AI) 25a, network interface (NI) 27a, program memory (ROM) 22a, work memory (RAM) 23a, pulse interface (PI) 24a, and logic circuit (PLD) 26a. These components are coupled with each other through well-known, appropriate data buses.

Based on the operation status supplied from the main controller 1, the inverter controller 2a as constructed above executes a predetermined processing operation to produce inverter control signal 261a to inverter 6a. The inverter 6a is controlled by the signal 261a to drive induction motor 7a. Tachometer generator 8a is coupled to the motor 7a to detect its rotational speed.

Using RAM 23a, CPU 21a executes a predetermined processing in accordance with a program stored in ROM 22a on the basis of data concerning the operation status of the electric vehicle taken therein through the network interfaces 27a and the serial transmission path 10. The processing operation executed by CPU 21a will be described in detail later.

Executing the predetermined processing, CPU 21a produces PWM pulse signal 261a to the inverter 6a through the logic circuit 26a, whereby the inverter 6a is driven and the rotational speed of the induction motor 7a is controlled.

The tachometer generator 8a produces pulse train 81a, the repetition frequency of which is in proportion to the rotational speed of the induction motor 7a. The pulse train 81a is taken in CPU 21a through the pulse interface 24a. Motor current signals 91a, 92a, 93a detected by detectors 9ua, 9va, 9wa and a signal 61a of the DC source voltage applied to the inverter 6a are supplied to CPU 21a through the analog input interface 25a.

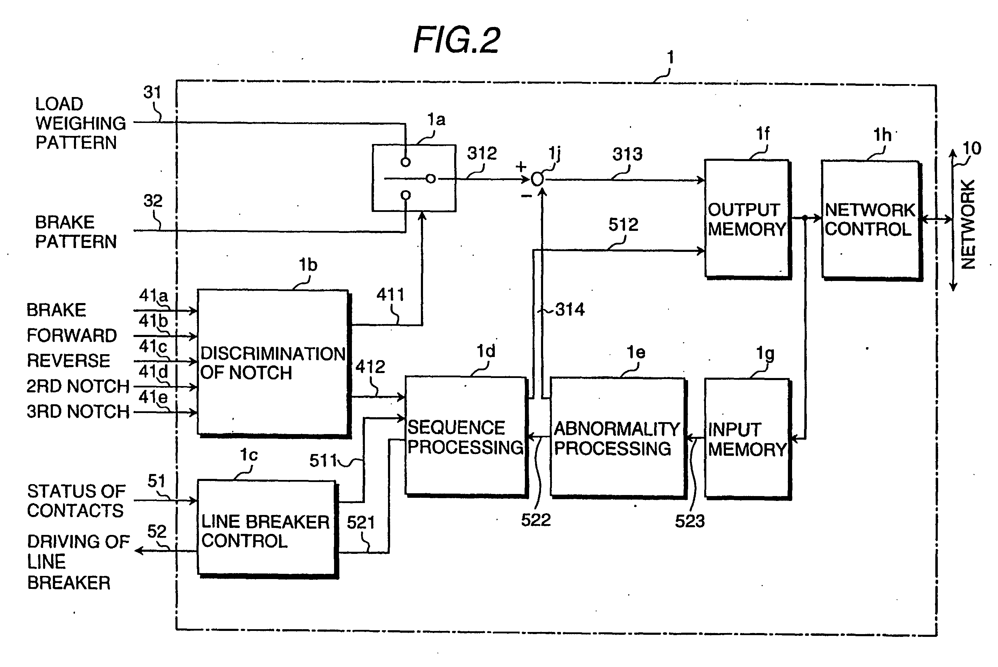

In the following, description will be done of the function and the processing operation of the main controller 1, referring to Fig. 2 showing the functional block diagram thereof.

As shown, the load weighing pattern 31 and the brake pattern 32 are led to switchover function 1a. Various notch signals 41a ~ 41e are led to notch discrimination function 1b. Based on the notch signals 41a ~ 41e, the notch discrimination function 1b produces PB signal 411 that indicates the powering status by "1" and the braking status by "0".

In response to the PB signal 411, the switchover function 1a selects to output either one of the load weighing pattern 31 and the brake pattern 32 as the torque instruction 312. Subtraction function 1j subtracts torque compensation value 314 produced by abnormality processing function 1e from the torque instruction 312 to produce the final torque instruction 313, which is stored in output memory 1f.

Notch discrimination function 1b converts the notch signals 41a ~ 41e into the notch information 412. Contact status signal 51 of the line breaker 5 is received by line breaker control function 1c, which produces LB signal 511 that indicates the on or off state in the contacts of the line breaker 5 by "1" or "0", respectively.

Sequence processing function 1d discriminates whether or not it is the timing of start of the inverter 6a, based on the notch information 412 and the LB signal 511. According to the result of the discrimination, a start flag is added to the notch information 412 to form signal 512. The start flag "1" means the start of the inverter. The thus formed signal 512 is stored in output memory 1f.

Network control function 1h produces data stored in the output memory 1f to the network 10 in response to the transmission demand 512 from the sequence processing function 1d. This function also takes therein data transmitted from the inverter controller 2a, 2b through the network 10 to store them in input memory 1g.

The transmitted data from the inverter controller 2a, 2b include regular data, such as a vehicle speed, source voltage, motor current and etc., taken for every predetermined constant period as well as abnormality data as described later.

Abnormality processing function 1e reads abnormality data 523 (information concerning a slip or skid, overvoltage, overcurrent, abnormal PWM pulse, etc.) from the input memory 1g to produce the signal 314 representing the adequate torque correction value. The torque instruction 312 is reduced by the signal 314 in the subtraction function 1j. As a result, the driving motor under the nonadhesive condition produces the reduced torque, whereby the readhesion of the motor is promoted.

However, it is also possible that not only a driving motor having fallen into the nonadhesive condition, but also all driving motors (including driving motors under the adhesive condition) are controlled to reduce their torque. It is further possible that the output of other driving motors under the normal condition is reduced and increased with a certain time difference.

If the abnormality is based on other causes, such as overvoltage, overcurrent and abnormal PWM pulses, an inverter controller associated with an inverter and a driving motor or motors, in which the abnormality occurs, is stopped to operate by producing signal 522 for resetting the start flag included in the signal 512 from the sequence processing function 1d. When the signal 522 assumes "1", the start flag is reset.

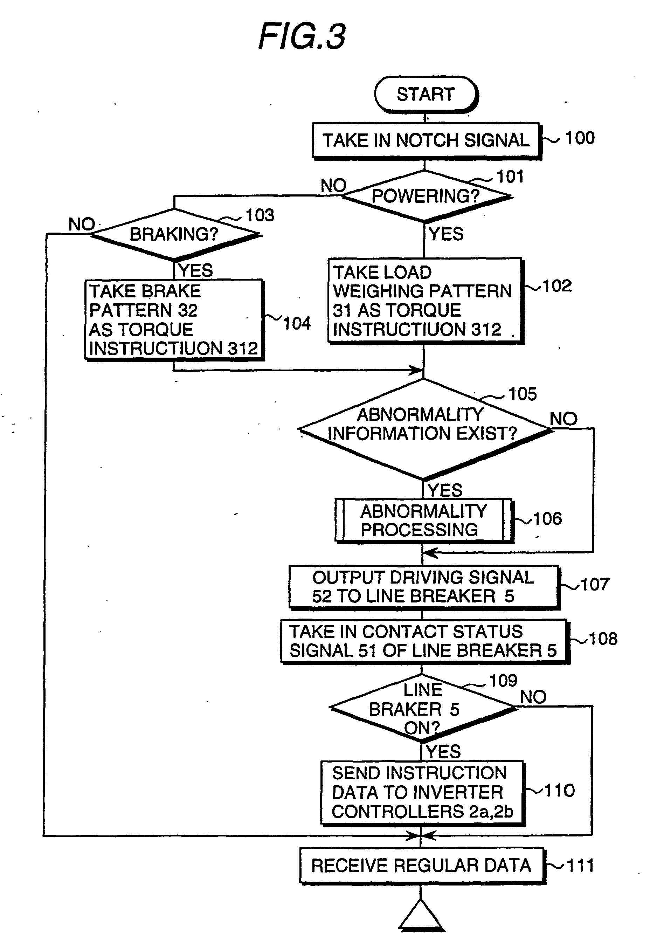

Fig. 3 is a flow chart showing the sequence of processing operation executed by CPU 11 in order to attain the function of the main controller 1 as mentioned above.

After start, the notch signal 41a ~ 41e is taken in at step 100. If it is judged at step 101 that the notch signal is the powering, the load weighing pattern 31 is taken as the torque instruction 312 to be stored in the output memory 1f (step 102). If it is judged at steps 101, 103 that the notch signal is not the powering, but the braking, the brake pattern 32 is taken as the torque instruction 312 to be stored in the output memory 1f (step 104).

If it is judged at steps 101, 103 that notch signal is neither powering nor braking, the processing operation is finished after regular data are received (step 111), since the electric vehicle is coasting or stops.

At step 105, it is discriminated whether or not the abnormality information exists, and if the abnormality exists, the abnormality processing is executed at step 106. If it is judged at step 105 that there exists no abnormality, step 106 of the abnormality processing is bypassed, and driving signal 52 is produced to the line breaker 5 at step 107. Then, at step 108, contact status signal 51 is taken from the line breaker 5.

Based on the signal 51, it is discriminated at step 109 whether or not the closing of the contacts of the breaker 5 is completed. If it is judged at step 109 that the closing of the contacts of the breaker 5 is completed, instruction data are sent to the inverter controller 2a, 2b (step 110). If it is judged at step 109 that the breaker 5 is not yet closed, the following processing is by-passed and ends after receipt of the regular data (step 111).

The processing operation as mentioned above is repeatedly executed in response to a periodical interruption signal produced by a hard timer. The period of time of the interruption signal is 1 msec., for example.

The instruction data as mentioned above is composed of an address of a sender (main controller 1), an address of receivers (inverter controllers 2a, 2b), a torque instruction, a notch information, etc..

Next, description will be done of the function and the processing operation of an inverter controller. Since, however, both the inverter controllers 2a, 2b have the same construction, the following explanation will be made on the inverter controller 2a only, for the sake of simplification of explanation.

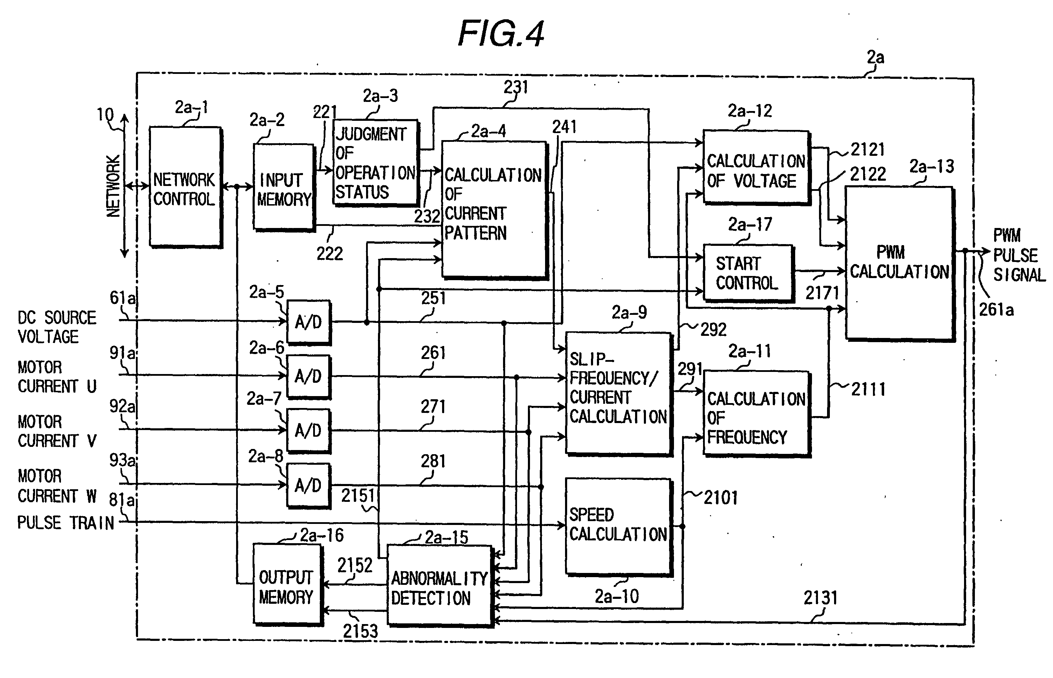

Fig. 4 is a block diagram schematically showing the function of the inverter controller 2a. As shown in the drawing, network control function 2a-1 takes instruction data for the inverter controller 2a through the network 10 and stores them in input memory 2a-2.

Operation status judgment function 2a-3 produces start signal 231 (assuming "1" for start and "0" for stop) and operation status signal 232 such as powering/braking, forward/reversal and so on.

Current pattern calculation function 2a-4 produces current pattern 241 for powering or braking by using the operation status signal 232, the torque instruction 222 stored in the input memory 2a-2 and the signal 251 of DC source voltage converted by the analog/digital converter (A/D) 2a-5 in the digital form.

Slip-frequency/current calculation function 2a-9 receives current pattern 241 as well as U, V, W-phase motor currents 261, 271, 281, which are converted by the A/D converters 2a-5 - 2a-8 in the digital form, to thereby produce the slip-frequency instruction 291 and the motor current instruction 292, both of which are necessary for attaining the motor current according to the current pattern 241.

Speed calculation function 2a-10 calculates the motor speed instruction 2101 in accordance with the following equation (1), based on the pulse train 81a obtained by the generator 8a:

$$F_r = N_p / 30 \qquad (1)$$

wherein $N_p$ indicates the number of pulses produced by the generator 8a for one second, i.e., the pulse repetition frequency. However, it is to be noted that the generator 8a used in this embodiment produces thirty pulses per rotation. Further, $F_r$ indicates a rotational speed of the driving motor in terms of Hz.

Frequency calculation function 2a-11 calculates the frequency instruction 2111 in accordance with the following equation (2), based on the slip-frequency 291 and the motor speed 2101:

$$F_i = F_s + F_r \qquad (2)$$

wherein $F_i$ and $F_s$ indicate the frequency instruction and the slip frequency, respectively; both being in terms of Hz.

Voltage calculation function 2a-12 produces the voltage instruction 2121 and the voltage-phase instruction 2122 on the basis of the current instruction 292 as well as the frequency instruction 2111 and the DC source voltage signal 251.

PWM calculation function 2a-13 produces the PWM pulse signal 261a for driving the inverter 6a on the basis of the frequency instruction 2111 as well as the voltage instruction 2121 and the voltage-phase instruction 2122.

Abnormality detection function 2a-15 serves to detect the overvoltage in the DC source voltage 251, the overcurrent in the three phase motor currents 261, 271, 281, a slip or skid in the motor speed 2101 and abnormality in the PWM pulse signal. When any of such abnormalities is detected, the function 2a-15 produces the abnormality flag 2151 (which indicates normality by flag "0" and abnormality by flag "1") and stores the abnormality information 2152 and the regular information 2153.

Start control function 2a-17 outputs the gate start signal 2171 allowing the PWM calculation function 2a-13 to produce the PWM pulse signal, when the start signal 231 from the operation status judgment function 2a-3 assumes "1" and the abnormality flag 2151 from the abnormality detection function 2a-15 assumes "0".

Since the address of the inverter controller 2a is stored in the output memory 2a-16, the network control function 2a-1 produces, to the network 10, the abnormality data composed of the addresses of a sender and a receiver as well as the abnormality information, or the regular data composed of the addresses of a sender and a receiver as well as the regular information.

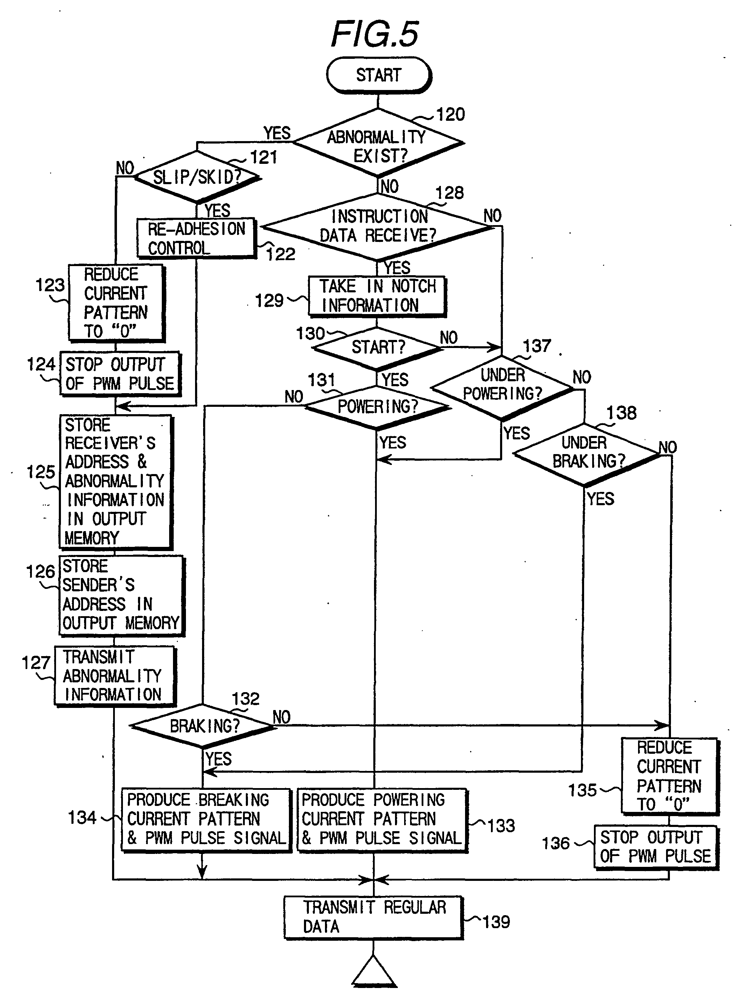

Referring next to the flow chart shown in Fig. 5, description will be done of the processing operation of CPU 21a in order to attain the aforesaid function of the inverter controller 2a.

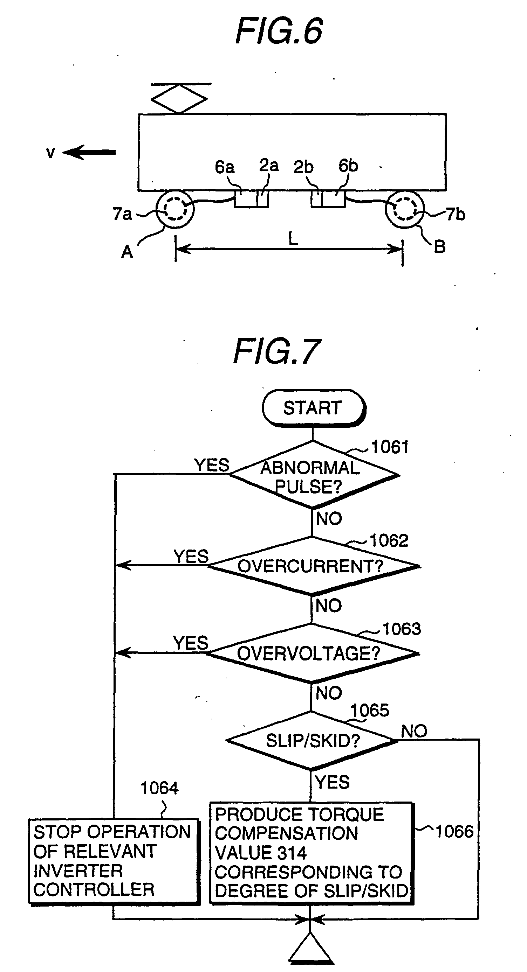

At step 120, it is checked whether or not the abnormality exists. If the existence of the abnormality is confirmed and it is judged at step 121 that the abnormality is based on the occurrence of a slip or skid, the re-adhesion control is conducted at step 122 to reduce the current pattern 241. The re-adhesion control will be further explained later, referring to Fig. 6.

In the case where the abnormality as mentioned above is not based on a slip or skid, but caused by an overvoltage, an overcurrent or the abnormality in the PWM pulse signal, the answer of the judgment at step 121 becomes "No" and the processing goes to step 123, at which the current pattern is reduced to zero, and the PWM pulse signal 261a is stopped at step 124.

Then, the address of the main controller 1 and the abnormality information are stored in the output memory 2a-16 (step 125). Further, the address of the inverter controller 2a is also stored (step 126). Thereby, the network control function 2a-1 produces the abnormality information to the network 10 (step 127), and the processing operation ends after the regular data is transmitted (step 139).

Returning to step 120, however, if no existence of abnormality is judged at that step, then it is further discriminated at step 128 whether or not instruction data from the main controller 1 are received. Usually, the aforesaid instruction data is composed of a sender's address, a receiver's address, a torque instruction and notch information.

When the instruction data is received, such data are stored in the input memory 2a-2 temporarily and the notch information thereamong is at first taken in at step 129. If based on the notch information, it is judged at step 130 that the start is instructed, then the operation status is judged at step 131.

If at step 131, the operation status is judged to be in the powering, the current pattern 241 for the powering is produced in accordance with the torque instruction 222 and the DC source voltage 251, and the PWM pulse signal 261a is generated on the basis of the current pattern 241 (step 133).

If at steps 131, 132, the operation status is judged to be not in the powering, but in the braking, the current pattern 241 for the braking is produced in accordance with the torque instruction 222 and the DC source voltage 251, and the PWM pulse signal 261a is generated on the basis of the current pattern 241 (step 134).

If at step 132, the operation status is judged to be not in the braking, the current pattern 241 is made "0" (step 135) and the production of the PWM pulse signal 261a is stopped (step 136).

If it is judged at step 128 that the instruction data is not received, or if it is judged at step 130 that the operation status is not in the start, then the operation status at that time is further judged (step 137). If it is judged at step 137 that the operation status is already under the powering, the processing for the powering is continuously executed at step 133.

If at steps 137, 138, the operation status is judged to be not under the powering, but under the braking, the processing for the braking is continuously executed at step 134. If, otherwise, the operation status is judged at those steps to be neither under the powering nor under the braking, steps 135, 136 are executed, and the processing operation ends after the regular data is transmitted (step 139). A series of the processing operations as mentioned above are repeated for every predetermined period of time.

In the following, description will be made of the operation of the above mentioned embodiment when a slip or skid occurs.

In the description, it is assumed that principal components for driving the vehicle are arranged as shown in Fig. 6. That is, a first driving system composed of the inverter controller 2a, the inverter 6a and the driving motor 7a is arranged on the front side of the electric vehicle in the travelling direction thereof (shown by a thick arrow), and a second driving system composed of the inverter controller 2b, the inverter 6b and the driving motor 7b is arranged on the rear side. Further, A and B show wheels driven by the motors 7a and 7b, respectively, and L indicates the distance therebetween.

If a slip occurs in the wheel A driven by the motor 7a, the inverter controller 2a carries out the re-adhesion control by executing step 122 in the flow chart as shown in Fig. 5 and transmits the abnormality data to the main controller 1 by executing steps 125, 126, 127 as shown in the same flow chart. The main controller 1 receives the abnormality data and carries out the abnormality processing of step 106 in the flow chart as shown in Fig. 3.

Details of the abnormality processing operation are shown by the flow chart as shown in Fig. 7. The occurrence or existence of the abnormality in the PWM pulse signal, the overcurrent and the overvoltage is checked successively at steps 1061, 1062, 1063. If any abnormality is found through executing those steps, the reset signal 522 (Fig. 2) is produced, which stops the operation of a relevant inverter controller (step 1064). Further, a "relevant" inverter controller means an inverter controller belonging to a driving system, in which an abnormality occurs.

In the case where no abnormality is found through executing steps 1061 ~ 1063, it is discriminated at step 1065 whether or not a slip or skid occurs, and if yes, the torque compensation value 314 is calculated and produced corresponding to the state of the slip or skid (step 1066). If, otherwise, it is judged that no slip or skid occurs, step 1066 is by-passed and the processing operation ends.

The torque compensation calculation executed at step 1066 upon occurrence of a slip is as follows.

Referring again to Fig. 6, let us assume that a slip occurs in the wheel A at the location as shown. Further, assuming that the speed of the electric vehicle is v, time T necessary for the wheel B to travel the distance L is expressed by the following equation (3):

$$T = L / v \qquad (3)$$

alG

**EP 0 832 779 B1**

The aforesaid speed v of the electric vehicle can be obtained from the information concerning the vehicle speed included in the regular data. By way of example, assuming that the vehicle speed is 30 km/h and L is 20 m, the time T becomes 2.4 sec.

Further, it is to be noted that the thus obtained time T also means a time duration from the time of occurrence of a slip in the wheel A to the time when the wheel B reaches the location where a slip occurred in the wheel A.

During about one second before and after occurrence of a slip or skid, the compensation value $\Delta I_p$ with respect to the current pattern to be given to the inverter controller 2b is calculated in proportion to the lasting time $\Delta t$ of the slip or skid signal, as shown in the following equation (4):

$$\Delta I_p = k \times \Delta t \qquad (4)$$

wherein k is a proportional constant.

By way of example, as shown in Fig. 8, if $\Delta I_p$ is 20% of the original pattern, the torque instruction can be reduced down to one seventh per one time of occurrence of a slip, compared with that in the conventional re-adhesion control.

In Fig. 6, if the slip occurs in the wheel B, the inverter controller 2b conducts the same processing as conducted by the inverter controller 2a. The main controller 1 increases the current pattern to be given to the inverter controller 2a in accordance with the equation (4) as mentioned above, whereby the reduction of torque can be prevented.

The foregoing has been described with respect to the embodiment, in which one main controller supervises and controls two sets of inverter controllers, each of which drives an individual inverter and an induction motor. However, it is a matter of course that the present invention can be applied to the case where a single main controller supervises and controls more than two inverter controllers, each of which controls an inverter feeding more than two induction motors.

For example, a single inverter can feed four induction motors, two of which are installed in a truck and the remaining two are installed in another truck. An inverter controller in this case carries out such a torque compensation calculation that is carried out by the main controller in the foregoing description.

In the aforesaid embodiment, as described with reference to Fig. 6, the time of initiating the compensation of the torque pattern for the inverter controller 2b upon occurrence of a slip in the wheel A is set to be one second before the wheel B reaches the location where the slip occurs with the wheel A. However, the current pattern can be reduced immediately, when it is detected that a slip occurs in the wheel A.

As described above, according to the present invention, a slip or skid in succeeding wheels becomes very difficult to occur even under such a condition of rail surfaces that a slip or skid has occurred in preceding wheels. Accordingly, the predetermined acceleration characteristic can be attained, and the degradation of the riding quality can be prevented.

**Claims**

1. A control apparatus for an electric vehicle, comprising

   a main controller (1) for determining an operation status of the vehicle on the basis of various kinds of operational information, and
   a plurality of inverter controllers (2a, 2b ...) connected with said main controller (1), each of which controls an inverter (6a, 6b ...) feeding at least one driving motor (7a, 7b ...) of the vehicle in accordance with the determined operation status,

   **characterised in that** when a non-adhesive state occurs at a certain motor (7a), said main controller (1) reduces the torque pattern supplied to the inverter controller (2a) associated with said certain motor (7a) immediately and reduces the torque patterns supplied to inverter controllers (2b ...) associated with other driving motors (7b ...) a predetermined time later.

2. The apparatus of claim 1, wherein the delay by said predetermined time in reducing the torque pattern with respect to said certain motor (7a), is made only in the supply to an inverter controller (2b ...) associated with a driving motor (7b ...) at the rear in the travelling direction of the vehicle.

3. The apparatus of claim 1, wherein the torque pattern to be supplied to an inverter controller (2b ...) associated with a driving motor (7b ...) at the front in the travelling direction of the vehicle is increased with respect to that supplied to the inverter controller (2a) associated with said certain motor (7a).

4. The apparatus of claim 2, wherein said predetermined time is the delay from the time the non-adhesive condition occurs in a certain wheel at a certain location on a track to the time a subsequent wheel more reaches the certain location.

**Patentansprüche**

1. Steuervorrichtung für ein elektrisches Fahrzeug, aufweisend:

eine Hauptsteuerung (1), um aufgrund verschiedener Betriebsinformationen einen Betriebszustand des Fahrzeugs zu bestimmen, und

mehrere Wechselrichter-Steuerungen (2a, 2b ...), die mit der Hauptsteuerung (1) verbunden sind und jeweils entsprechend dem bestimmten Betriebszustand einen Wechselrichter (6a, 6b ...), der mindestens einen Antriebsmotor (7a, 7b ...) versorgt, steuern,

**dadurch gekennzeichnet, daß** die Hauptsteuerung (1) dann, wenn an einem gewissen Motor (7a) ein haftungsloser Zustand auftritt, das Drehmomentmuster, das der dem gewissen Motor (7a) zugeordneten Wechselrichter-Steuerungen (2a) zugeführt wird, sofort reduziert und die Drehmomentmuster, die anderen Antriebsmotoren (7b ...) zugeordneten Wechselrichter-Steuerungen (2b ...) zugeführt werden, um eine vorbestimmte Zeit später reduziert.

2. Vorrichtung nach Anspruch 1, wobei die Verzögerung um die vorbestimmte Zeit unter Verringerung des Drehmomentmusters bezüglich des genannten gewissen Motors (7a) lediglich bei der Versorgung einer Wechselrichter-Steuerung (2b ...) ausgeführt wird, die einem Antriebsmotor (7b ...) hinten bezüglich der Fahrrichtung des Fahrzeugs zugeordnet ist.

3. Vorrichtung nach Anspruch 1, wobei das Drehmomentmuster für eine Wechselrichter-Steuerung (2b ...), die einem Antriebsmotor (7b ...) zugeordnet ist, der sich in Fahrtrichtung des Fahrzeugs vorne befindet, bezüglich dem für eine Wechselrichter-Steuerung (2a), die dem genannten gewissen Motor (2a) zugeordnet ist, erhöht wird.

4. Vorrichtung nach Anspruch 2, wobei die vorbestimmte Zeit die Verzögerung von dem Zeitpunkt des Auftretens des haftungslosen Zustands bei einem gewissen Rad an einem gewissen Ort auf der Strecke bis zu der Zeit, zu der ein weiteres folgendes Rad den gewissen Ort erreicht, darstellt.

**Revendications**

1. Dispositif de commande pour un véhicule électrique, comportant

un contrôleur principal (1) pour déterminer un état de fonctionnement du véhicule sur la base de divers types d'informations opérationnelles, et
une pluralité de contrôleurs d'onduleur (2a, 2b ...) connectés audit contrôleur principal (1), chacun commandant un onduleur (6a, 6b ...)

alimentant au moins un moteur d'entraînement (7a, 7b ...) du véhicule conformément à l'état de fonctionnement déterminé,

**caractérisé en ce que**, lorsqu'un état non-adhérent apparaît sur un certain moteur (7a), ledit contrôleur principal (1) réduit la caractéristique de couple appliquée au contrôleur d'onduleur (2a) associé audit certain moteur (7a) immédiatement, et réduit les caractéristiques de couple appliquées aux contrôleurs d'inverseur (2b ...) associés aux autres moteurs d'entraînement (7b ...) un instant prédéterminé plus tard.

2. Dispositif selon la revendication 1, dans lequel le retard dudit temps prédéterminé pour réduire la caractéristique de couple par rapport audit certain moteur (7a), est réalisé uniquement dans l'alimentation d'un contrôleur d'onduleur (2b ...) associé à un moteur d'entraînement (7b ...) sur l'arrière dans la direction de déplacement du véhicule.

3. Dispositif selon la revendication 1, dans lequel le motif de couple à appliquer à un contrôleur d'onduleur (2b ...) associé à un moteur d'entraînement (7b ...) à l'avant dans le direction de déplacement du véhicule est augmenté par rapport à celui appliqué au contrôleur d'onduleur (2a) associé audit certain moteur (7a).

4. Dispositif selon la revendication 2, dans lequel ledit temps prédéterminé est le retard entre le temps où la condition de non-adhérence apparaît dans une certaine roue à un certain emplacement sur une piste et le temps où une roue suivante atteint davantage le certain emplacement.

## FIG.1

EP 0 832 779 B1

## FIG.2

LOAD WEIGHING PATTERN — 31

BRAKE PATTERN — 32

BRAKE — 41a
FORWARD — 41b
REVERSE — 41c
2RD NOTCH — 41d
3RD NOTCH — 41e

STATUS OF CONTACTS — 51

DRIVING OF LINE BREAKER — 52

1a

312    1j    313

DISCRIMINATION OF NOTCH — 1b

411

412

LINE BREAKER CONTROL — 1c

511

521

SEQUENCE PROCESSING — 1d

ABNORMALITY PROCESSING — 1e

INPUT MEMORY — 1g

522    523

314

512

OUTPUT MEMORY — 1f

NETWORK CONTROL — 1h

NETWORK — 10

1

EP 0 832 779 B1

# FIG.3

START

TAKE IN NOTCH SIGNAL ~100

POWERING? ~101
NO
YES

BRAKING? ~103
NO
YES

TAKE BRAKE PATTERN 32 AS TORQUE INSTRUCTIUON 312 ~104

TAKE LOAD WEIGHING PATTERN 31 AS TORQUE INSTRUCTIUON 312 ~102

ABNORMALITY INFORMATION EXIST? ~105
NO
YES

ABNORMALITY PROCESSING ~106

OUTPUT DRIVING SIGNAL 52 TO LINE BREAKER 5 ~107

TAKE IN CONTACT STATUS SIGNAL 51 OF LINE BREAKER 5 ~108

LINE BRAKER 5 ON? ~109
NO
YES

SEND INSTRUCTION DATA TO INVERTER CONTROLLERS 2a,2b ~110

RECEIVE REGULAR DATA ~111

## FIG.4

EP 0 832 779 B1

## FIG.5

START

120 ABNORMALITY EXIST?

121 SLIP/SKID? — YES / NO

122 RE-ADHESION CONTROL

123 REDUCE CURRENT PATTERN TO "0"

124 STOP OUTPUT OF PWM PULSE

125 STORE RECEIVER'S ADDRESS & ABNORMALITY INFORMATION IN OUTPUT MEMORY

126 STORE SENDER'S ADDRESS IN OUTPUT MEMORY

127 TRANSMIT ABNORMALITY INFORMATION

128 INSTRUCTION DATA RECEIVE? — NO

129 TAKE IN NOTCH INFORMATION

130 START? — NO

131 POWERING? — NO

137 UNDER POWERING? — NO

138 UNDER BRAKING? — NO

132 BRAKING? — NO

YES

134 PRODUCE BREAKING CURRENT PATTERN & PWM PULSE SIGNAL

133 PRODUCE POWERING CURRENT PATTERN & PWM PULSE SIGNAL

135 REDUCE CURRENT PATTERN TO "0"

136 STOP OUTPUT OF PWM PULSE

139 TRANSMIT REGULAR DATA

# FIG.6

6a   2a   2b   6b

7a   7b

A   L   B

v

# FIG.7

START

1061
ABNORMAL PULSE?
YES
NO

1062
OVERCURRENT?
YES
NO

1063
OVERVOLTAGE?
YES
NO

1065
SLIP/SKID?
NO
YES

1064
STOP OPERATION OF RELEVANT INVERTER CONTROLLER

1066
PRODUCE TORQUE COMPENSATION VALUE 314 CORRESPONDING TO DEGREE OF SLIP/SKID

# FIG.8

# FIG.9 (PRIOR ART)